# EUROPEAN PATENT APPLICATION

(11) **EP 3 251 780 A1**
(43) Date of publication of application: **06.12.2017**
(21) Application number: 16743722.7
(22) Date of filing: 29.01.2016
(51) Int. Cl.: B23K 9/00

(54) **SINGLE-BODY CONCENTRATION-TYPE SMALL WELDING MACHINE**

(30) Priority: 30.01.2015 KR 20150015269
(71) Applicant: Rexwell Co. Ltd., Incheon 21302 (KR)
(72) Inventor: PARK, Eung Duk, Incheon 21302 (KR); LEE, Byoung Mo, Incheon 21952 (KR)
(74) Representative: Ter Meer Steinmeister & Partner
(86) International application number: PCT/KR2016/000988
(87) International publication number: WO 2016/122244

(57) **Abstract**

An single-body concentration-type small welding machine comprises a single unit constructed as one body in a centralized arrangement, a body portion mounting the single unit therein, an handle portion integrated to the body portion and a welding rod holder mounted on a support portion which is fixed to the body portion, in which the body portion comprises a heat sink, a power input/output circuit portion including a rectifying portion and an inverter circuit constituted by mounting parts on a first print circuit board positioned on the lower surface of the heat sink; and a system operating control portion including a system direct current supply portion and a control portion including a pulse width modulation circuit for controlling a system output power, which are constituted by mounting parts on a second print circuit board positioned on the upper surface of the heat sink.

## Description

### BACKGROUND OF THE INVENTION

### Field of the Invention

The invention is related to providing a portable welder, and in particularly, to providing an integrated single compact welder including a welding rod holder integrally mounted on the front thereof and important parts of a system concentrated in a body to accomplish a compact structure, thereby facilitating the carrying and using thereof.

### Description of the Related Art

A conventional invert welder includes an inverter power supply apparatus which converts a commercial power source into a direct current, rectifies the direct current into an alternative current by means of a plurality of electronic switches, for example IGBTs (Insulated Gate Bipolar Transistor), then lowers the AC voltage by a transformer and again rectifies the lowered power source into a predetermined direct current. The inverter power supply apparatus is constructed so that a larger number of electronic parts and a larger and heavier transformer are arranged to rectify the commercial power source into the direct current and then invert the direct current into an alternative current having a predetermined control frequency in order to output the power source of a high voltage and high current.

The conventional power supply apparatus provided in the conventional electrical welder is known as a configuration that the electronic switches and transformer for producing a larger quantity of heat in converting the commercial power into the high voltage and high current are mounted in the same space together with other parts not producing the heat. Due to it, the conventional welder should be constructed in a larger bulky and heavier weight. It is inconvenient to carry the conventional system and perform the simple welding at a household or a factory and/or in situ.

A typical conventional art for resolving the inconvenience of the conventional electric arc welder is disclosed in US Patent No. 5,831,240 showing that a number of inner parts are intended to construct as a module in a compact assembly and enhance the assembly thereof and greatly reduces its full size resulting from the optimization of the mounting space therein, thereby accomplishing a relatively smaller and lighter configuration.

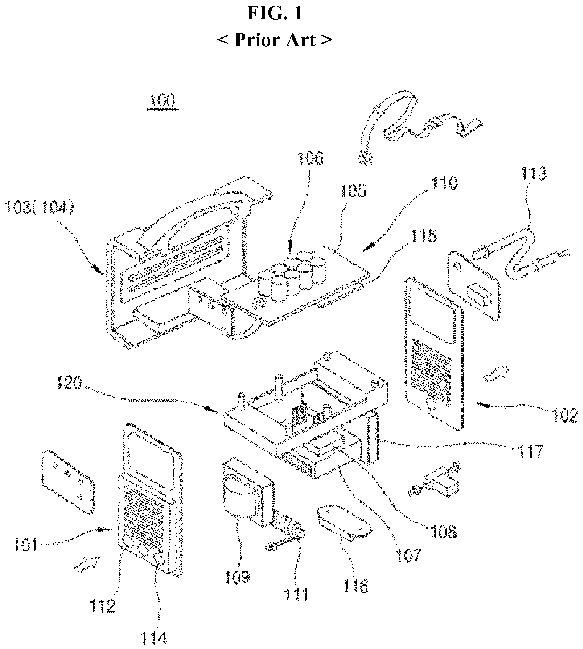

As shown Fig. 1, a power supply apparatus 100 comprises a housing 110 including a front panel 101 and a rear panel 102, a left panel 103 and a right panel 104. The power supply apparatus 100 is configured to convert a commercial AC power into a DC power by being rectified by an input-side rectifier (not shown) that is arranged along with a semiconductor module 107 and to smooth the rectified power by a smoothing capacitor 106 that is mounted on a main printed circuit board 105 constituted as a system control circuit. The DC power is converted into a high-frequency power source by an inverter including the semiconductor module 107 which is connected in a bridge configuration and is switched at a high frequency. The high frequency power source is rectified by an output-side rectifier and smoothed by a smoothing reactor 111.

Herein, the semiconductor module 108 comprises the input-side rectifier, the output-side rectifier, the inverter including switching elements, flywheel diodes, an output-side rectifying circuit and a driving unit. These parts are generally heated during operating with being mounted on the upper surface of a heat sink 107.

Besides, the power supply apparatus 100 comprises a voltage lowering transformer 109 that is heated, a RF unit 116 mounted on a heat sink 107and a blowing fan 117 mounted at the rear side of the heat sink 107. A power supply cable 113 is arranged on the real panel 102 and non-heated parts are mostly mounted on a main printed circuit board.

Such heating and non-heating parts are arranged to be separated from each other on the upper and lower portions of a chassis 120 coupled to the front and rear panels 101 and 102, in a manner that the heat sink 108 is attached to the upper or lower portions of the chassis 120. Therefore, the power supply apparatus 100 has advantages in that the heat produced by the heating parts doesn't do any effect on the non-heating ones. Hence the system can be into a smaller configuration.

But, the electric arc welder assembling the power supply apparatus 100 requires a separate welding holder and a relative longer extension cable for the use of the commercial power. The configuration for mounting a part called "Chassis" for separating the heating parts and the non-heating parts from each another is complicated and except for the heating parts mounted on the heat sink the relatively heavier voltage lowering transformer and reactor, etc. must secure separate spaces for the installment thereof. For it, the conventional power supply apparatus has a limitation in becoming small-sized and lighter.

In light of these points, it is preferable if the electric arc welder is made into a simple configuration integrated into a single unit along with the heating parts in a manner that the separate extension cable for the welding holder is not required and the heating parts be used with being mounted on the heat sink, and also if the compact and lighter configuration without giving any effects on the system performance accomplished.

### SUMMARY OF THE INVENTION

A main object of the invention is to provide an single-body concentration-type small welding machine comprising a welding rod holder integrally mounted on the front surface thereof and important parts mounted in a body portion in a centralized arrangement on a single unit in order to become compact and portable, thereby enabling the free use thereof at any time and any place.

Other object of the invention is to provide an single-body concentration-type small welding machine comprising a welding rod holder integrally mounted on the front surface thereof, a body portion constructed in a single unit mounting important parts of a system in a centralized arrangement therein and a handle portion and/or an housing integrally extended from the body portion in a horizontal or vertical direction to mount another independent parts in the their inner portion, thereby enabling a user to effectively act for a load of a system and take its balance.

Another object of the invention is to provide an single-body concentration-type small welding machine comprising a body portion mounting a single unit with heating parts and non-heating parts provided in a centralized arrangement on a heat sink to be separated from each other and a housing including a welding rod holder mounted to be rotated at the front surface of the body portion and independent parts mounted therein.

According to a first embodiment of the invention, an single-body concentration-type small welding machine comprises a single unit constructed as one body in a centralized arrangement, a body portion mounting the single unit therein, an handle portion integrated with the body portion and a welding rod holder mounted on a support which is fixed to the body portion, in which the body portion comprises the single unit mounted therein and including a heat sink, a power input/output circuit portion including a rectifying portion and an inverter constituted by mounting parts on a first print circuit board and a system operating control portion including a system direct current supply rectifying a commercial power source and a control portion provided with a pulse width modulation (PWM) circuit for controlling the output power source of the system that are formed by parts mounted on a second print circuit board mounted on the upper surface of the heat sink; the handle portion including a support elastically supported the handle of the welding rod holder to the body portion through a spring and a switching portion mounted thereon to turn on and/or off the welder; and a housing portion including a high voltage transformer mounted therein and a power inputting terminal and an earth line arranged thereon to be excluded another power supply for the welding rod holder.

The first print circuit board comprises insulated gate bipolar transistors (IGBTs) constituted as larger outputting elements of an inverter circuit that is connected to a rectifying portion for rectifying a commercial power and rectifying elements including transistors or diodes arranged to rectify the output of insulated gate bipolar transistors which are closely mounted in pairs two by two to both surfaces of the heat sink.

The second print circuit board comprises a power input/output circuit portion to be constituted as heating parts and a system operating control portion to be constituted as non-heating parts, each of which are not only constructed as one board but also separated not to take a thermal influence on each other.

According to a second embodiment of the invention, an single-body concentration-type small welding machine comprises a body portion, a handle portion integrally coupled with the body portion and a welding rod holder mounted on a support portion that is provided on the front surface of the body portion, in which the body portion comprises a high voltage transformer and a smooth reactor mounted therein, a power line including a power input circuit portion and an earth line arranged thereon, a welding visor mounted on the front thereof and a lighting mounted to illuminate the end of a welding rod; the handle portion comprises a condenser mounted therein to be projected from a single unit in the housing and a switching portion mounted on the lower of the front surface thereof ; and the lower housing comprises the single unit mounted in an upside down arrangement.

A power battery able to be charged or discharged may be mounted in the lower portion of the housing and/or the body portion. The battery is acted as the balance weight of a whole system, thereby facilitating the welding working of a user.

According to a third embodiment of the invention, an single-body concentration-type small welding machine comprises a body portion positioned on the front surface thereof, a housing positioned on the rear surface thereof and a connecting portion positioned there between, in which the body portion comprises a welding rod mounted on a supporting portion that is fixed to the lower of the body portion to be projected, a reactor, a high voltage transformer and a smooth condenser properly mounted along with electrical wirings therein; a connecting portion is constructed to pass electrical wirings there through and rotated up and downward by the reference to be bent downward or upward for the weight balance of a whole system; and the housing mounting the single unit therein.

### BRIEF DESCRIPTION OF THE DRAWINGS

The above and other features and advantages will become more apparent to those of ordinary skill in the art by describing in detail exemplary embodiments with reference to the attached drawings, in which:
Fig. 1 is an exploded perspective view illustrating a power supply apparatus of a conventional welder.
Fig. 2 is a cross-sectional view illustrating an assembled state of an single-body concentration-type small welding machine according to a first embodiment of the invention.
Fig, 3 is a cross-sectional view illustrating a single unit constructed according to the principal of the invention.
Fig. 4 is a cross-sectional view illustrating an assembled state of an single-body concentration-type small welding machine according to a second embodiment of the invention.
Fig. 5 is a cross-sectional view illustrating an assembled state of an single-body concentration-type small welding machine according to a third embodiment of the invention.

In the following description, the same or similar elements are labeled with the same or similar reference numbers.

### DETAILED DESCRIPTION

The present invention now will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "includes", "comprises" and/or "comprising," when used in this specification, specify the presence of stated features, integers, steps, operations, elements, and/or components, but do not preclude the presence or addition of one or more other features, integers, steps, operations, elements, components, and/or groups thereof. In addition, a term such as a "unit", a "module", a "block" or like, when used in the specification, represents a unit that processes at least one function or operation, and the unit or the like may be implemented by hardware or software or a combination of hardware and software.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Preferred embodiments will now be described more fully hereinafter with reference to the accompanying drawings. However, they may be embodied in different forms and should not be construed as limited to the embodiments set forth herein. Rather, these embodiments are provided so that this disclosure will be thorough and complete, and will fully convey the scope of the disclosure to those skilled in the art.

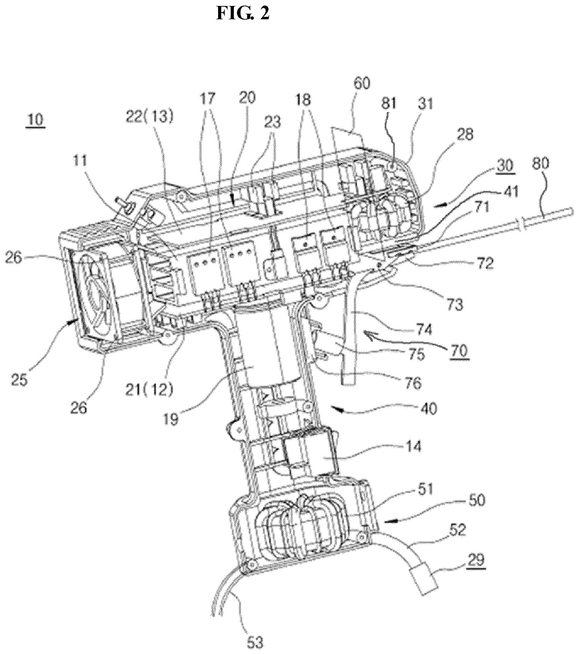

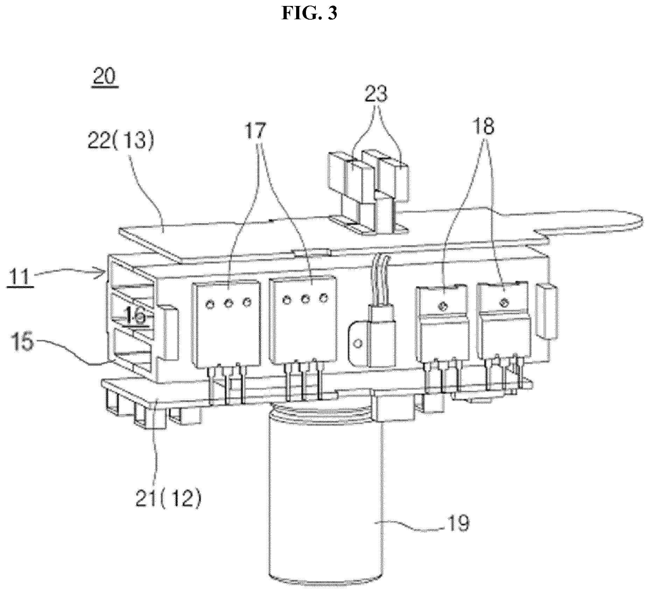

Figs. 2 and 3 are a side cross-sectional view showing an integrated single body constructed according to a first embodiment of the invention and a perspective view schematically showing a configuration of a single unit according to the invention.

As shown in drawings, according to a first embodiment of the invention an single-body concentration-type small welding machine 10 comprises a single unit 20 constructed in an integrated arrangement. The single unit 20 comprises a body portion 30 including a heat sink 11, a handle portion 40 integrated to the body portion 30 and a welding rod holder 70 mounted on a support portion 41 in order to be integrated to the body portion 30.

The body 30 comprises a heat sink 11 and the single unit 20 mostly important parts of an electrical system in a centralized arrangement thereon, which can be called a centralized single unit 20.

The single unit 20 comprises the heat sink 11, a power input/output circuit portion 12 including a rectifying portion and an inverter circuit constituted by mounting parts t on a first print circuit board 21 positioned on the lower surface of the heat sink 11; and a system operating control portion 13 including a system direct current supply portion and a control portion including a pulse width modulation (PWM) circuit for controlling a system output power, which are constituted by mounting parts on a second print circuit board 22 positioned on the upper surface of the heat sink 11, which are electrically connected to a power input circuit portion 29 to function as a power adaptor and a switching circuit portion 14 connected to the power input circuit portion 29 to turn on/off the operation of the system.

The heat sink 11 is a rectangular body made of a metal such as an aluminum material, etc., which includes a plurality of radiating fins 15 dividing a hollow of the center portion thereof in a longitudinal direction to form air flowing passages 16. The first print circuit board 21 is mounted in an insulated state to the lower surface of the heat sink 11 by a fixing means not shown, for example through spacers to be spaced from the lower surface of the heat sink 11. Rectifying elements 18 for rectifying an output of a transformer to receive an output from the insulated gate bipolar transistors 17 of parts on the upper surfaces of the first print circuit board 21, two are closely adhered in pair to one side surface of the heat sink 11 with being mounted on the first print circuit board 21. Similarly, the insulated gate bipolar transistors (IGBT) 17 of a larger output element forming an inverter circuit, two also are closely adhered in pair to one side surfaces of the heat sink 11 with being mounted on the first print circuit board 21. A large capacity of condenser 19 for the stability of the current is positioned in the handle portion 40.

The second print circuit board 22 including the system operating control portion 13 is mounted on the upper surface of the heat sink 11 to be positioned by a fixing member 23 in the inner upper portion of the body 30 along with the heat sink 11.

Herein, it is noted that the power input/output portion 12 including the heating parts and the system operating control portion 13 including the non-hearting parts each are configured as one-board to be separately mounted from each other, so that they don't give any influence to each other.

A blowing fan 25 is mounted in the body portion 30 by a plurality of supporting screws 26 to be positioned adjacent to the rear surface of the body portion 30.

On the other hand, except for the parts of the power input/output circuit portion 12 and the system operating control portion 13, the single unit 20 is connected in a wiring to a smooth reactor 28 which is mounted in the space of a front portion 31 integrally extended from the body portion 30.

A lower housing 50 integrally constructed on the lower portion of the handle portion 40 comprises a high voltage transformer 51 mounted therein. The high voltage transformer 51 is disclosed in Korean Patent No. 10-1086471, issued on November 17, 2011, and Korean Patent No. 10-1392045, issued on April 28, 2014. Herein, it is noted that the cores of disclosed high voltage transformers are made of a nano-amorphous material, not ferrite materials, so that the restriction of a core area is removed, and the thermal dissipation is easy, thereby accomplishing various high voltage output.

Therefore, the single unit 20 is unified by effectively mounting electrical welding parts in a centralized arrangement on the heat sink 11 to be mounted in a smaller space of the body portion 30, and additional parts, for example the smooth reactor 28, the condenser 19 and the high voltage transformer 51 each are dispersed and arranged in the front portion 31 integrally constructed with the body portion 30, the handle portion 40 and the lower housing 50 with their electrical parts being wired to the corresponding print circuit boards. Such like this configuration makes parts to be concentrated and unified, thereby enabling the miniature of a system.

Herein, except for the smooth reactor 28, the condenser 19 and the high voltage transformer 51, the power input circuit portion 13 constructed as one board on the second print circuit board 12 are commonly called an independent part.

Also, according to the invention a power input circuit portion 29 which is configured as an adapter including a system power input terminal connected to an outside of the system is coupled to a power line 52 extended from the housing 50.

According to the invention, an single-body concentration-type small welding machine 10 further comprises a welding visor 60 mounted on the front portion of a body portion 30. An upper portion 71 of the welding rod holder 70 is fixed to a support portion 41 on the lower portion of the front portion 31, in which the upper portion 71 acts as a positioning means to make a high voltage applied thereto. A lower portion 72 is constructed to rotate its front lower portion downward by the reference of a rotating axis 73. A holder handle 74 also is constituted as an extending portion extended downward from the rotating axis 73 and includes a support 75 mounting an elastic spring therein, in which the support 75 is provided between an intermediate portion of the handle portion 40 and a fulcrum 76.

The invention has another advantage in that a chargeable power battery (not shown) can be mounted on the lower surface of the housing 50, in which the chargeable power battery maintains a balance to a whole weight of a system to facilitate the welding work of a user.

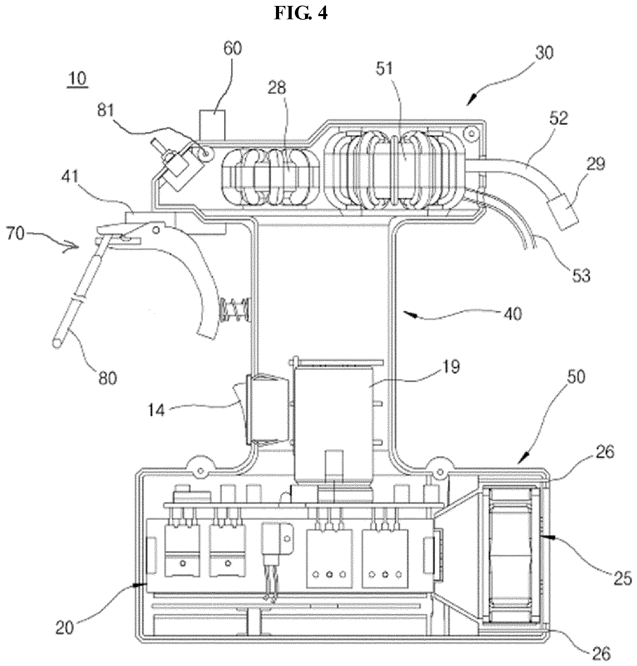

As shown in Fig. 4, a second embodiment of the invention adapts all parts of an single-body concentration-type small welding machine provided in the first embodiment, and in particularly, comprises a single unit 20 of the same configuration constructed centering a heat sink 11.

The single-body concentration-type small welding machine 10 is an upset configuration of the first embodiment, all parts of which are the same as those of the first embodiment. In other words, the body portion 30 comprises a handle portion 40 integrally extended there from and a welding rod holder 79 mounted on a support portion 41 that is fixed to the body portion 30. The detailed description of the welding rod holder 70 is omitted due to the same one as the configuration of the first embodiment.

The body portion 30 comprises a high voltage transformer 51 and a smooth reactor 28 mounted therein, which are connected to a power line provided with a power input circuit portion 29 and an earth line 53. Herein, the first embodiment appears that the high voltage transformer 51 and the smooth reactor 28 are positioned in the lower portion of a system. A welding visor 60 is mounted on the front portion of the body portion 30. If necessary, an illumination light 81 can be mounted on the front portion of the body portion 30 to light up the end of a welding rod.

The handle portion 40 receives a condenser 19 to be projected from a single unit 20 which is mounted in a housing 50. A switching portion 14 is mounted on the front lower portion of the handle portion 40.

A lower housing 50 comprises the single unit 20 mounted in an overturned arrangement, the configuration of which is the same as that of the single unit in the first embodiment. The same references are allocated to the same parts of the single unit 20, the detailed explanation of which is omitted.

The second embodiment further comprises a chargeable/dischargeable power battery (not shown) mounted on the lower portion of the housing 50 and/or in the body portion 30 to keep the balance to the whole weight of a system, thereby facilitating the welding working of users.

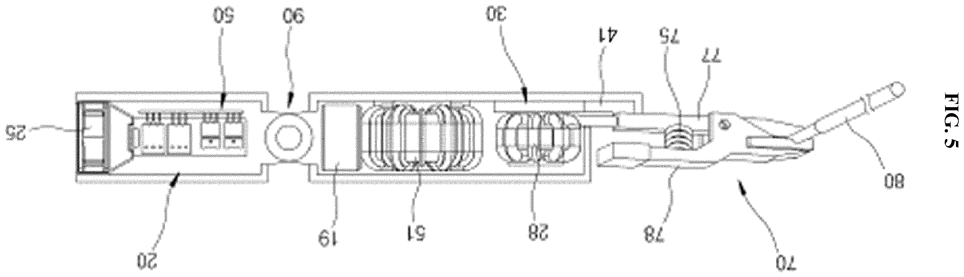

As shown in Fig. 5, according to a third embodiment of the invention a handle portion 40 is omitted. For example, an single-body concentration-type small welding machine 10 comprises a body portion 30 on the front surface thereof, a housing 50 on the rear surface and a connecting portion 90 positioned on the middle portion between them instead of the handle portion 40.

The body portion 30 comprises a welding rod holder 70 mounted on a support portion 41 to be projected forward from the lower portion of the body portion 30 and supported thereon. The welding rod holder 70 comprises a lower portion including a fixing block 77 fixed to the support portion 41, to which a high voltage is applied, and an upper portion including a rotating block 78 which is elastically supported by a spring 78 to grasp a welding rod 80.

The body portion 30 comprises not only a reactor 28 and a high voltage transformer 51 like the second embodiment but also a smooth condenser 91, which are properly arranged therein.

The connecting portion 90 is configured to let electrical wirings of a system to be passed there through so that the up and down rotation of the body portion 30 or the handle portion 40 is made. The configuration allows the housing 50 to be bent downward for the weight balance of the whole system.

The housing 50 comprises a single unit 20 therein, which is constructed as the configuration using the same one as those of the first and second embodiments except for the condenser 19. The detailed explanation of the single unit 20 is omitted.

While the present disclosure has been described with reference to the embodiments illustrated in the figures, the embodiments are merely examples, and it will be understood by those skilled in the art that various changes in form and other embodiments equivalent thereto can be performed. Therefore, the technical scope of the disclosure is defined by the technical idea of the appended claims The drawings and the forgoing description gave examples of the present invention. The scope of the present invention, however, is by no means limited by these specific examples. Numerous variations, whether explicitly given in the specification or not, such as differences in structure, dimension, and use of material, are possible. The scope of the invention is at least as broad as given by the following claims.

## Claims

1. An single-body concentration-type small welding machine comprises a single unit constructed as one body in a centralized arrangement, a body portion mounting the single unit therein, a handle portion integrated with the body portion, and a welding rod holder mounted on a support which is fixed to the body portion, **characterized in that**:
the body portion mounting the single unit comprising:
a heat sink;
a power input/output circuit portion including a rectifying portion and an inverter constituted by mounting parts on a first print circuit board; and
a system operating control portion including a system direct current supply rectifying a commercial power source and a control portion provided with a pulse width modulation (PWM) circuit for controlling the output power source of the system that are formed by parts mounted on a second print circuit board mounted on the upper surface of the heat sink;
the handle portion comprising:
a support elastically supporting the handle of the welding rod holder to the body portion through a spring; and
a switching portion mounted thereon to turn on and/or off the welder; and
a housing portion comprising:
a high voltage transformer mounted therein; and
a power inputting terminal and an earth line arranged thereon to be excluded another power supply for the welding rod holder.

2. The single-body concentration-type small welding machine of Claim 1, wherein the first print circuit board comprises insulated gate bipolar transistors constituted as larger outputting elements of an inverter circuit that is connected to a rectifying portion for rectifying a commercial power and rectifying elements including transistors or diodes arranged to rectify the output of insulated gate bipolar transistors which are closely mounted in pairs two by two to both surfaces of the heat sink.

3. The single-body concentration-type small welding machine of Claim 1, wherein the second print circuit board comprises a power input/output circuit portion to be constituted as heating parts and a system operating control portion to be constituted as non-heating parts, each of which are not only constructed as one board but also separated not to take a thermal influence on each other.

4. An single-body concentration-type small welding machine comprises a body portion, a handle portion integrally coupled with the body portion, and a welding rod holder mounted on a support portion that is provided on the front surface of the body portion, **characterized in that**:
the body portion comprises a high voltage transformer and a smooth reactor mounted therein, a power line including a power input circuit portion and an earth line arranged thereon, a welding visor mounted on the front thereof and a lighting mounted to illuminate the end of a welding rod; and
the handle portion comprises a condenser mounted therein to be projected from a single unit in a housing and a switching portion mounted on the lower of the front surface thereof;
wherein the housing comprises the single unit mounted in an upside down arrangement.

5. An single-body concentration-type small welding machine comprises a body portion positioned on the front surface thereof, a housing positioned on the rear surface thereof and a connecting portion positioned there between, **characterized in that**:
the body portion comprises a welding rod holder mounted on a supporting portion that is fixed to the lower of the body portion to be projected, a reactor, a high voltage transformer, and a smooth condenser properly mounted along with electrical wirings therein;
the connecting portion is constructed to pass electrical wirings there through and rotated up and downward by the reference to be bent downward or upward for the weight balance of the single-body concentration-type small welding machine; and
the housing mounting a single unit therein.

6. The single-body concentration-type small welding machine of Claim 1 or claim 4 and claim 5, wherein the welding rod holder includes an upper portion fixed to a support portion on the lower portion of the front portion of the body portion, in which the upper portion acts as a positioning means to make a high voltage applied thereto, a lower portion is constructed to rotate its front lower portion downward by the reference of a rotating axis, and a holder handle is constituted as an extending portion extended downward from the rotating axis, thereby operating the handle of the welding rod holder and fixing a welding rod to the front of the welding rod holder with the middle portion of the handle portion being grasped.

7. The single-body concentration-type small welding machine of Claim 1 or claim 4 and claim 5, wherein the single-body concentration-type small welding machine comprises the body portion including the single unit constructing in a centralized arrangement with system parts, the handle portion and/or the housing integrally extended in a horizontal or vertical, in the inner of which a high voltage transformer, a reactor, a condenser and independent parts of the power input/output circuit portion are arranged with being electrically connected to the heating and non-heating parts of the single unit.
